# EUROPEAN PATENT SPECIFICATION

(11) **EP 0 459 797 B1**
(45) Date of publication and mention of the grant of the patent: **08.02.1995**
(21) Application number: 91304887.2
(22) Date of filing: 30.05.1991
(51) Int. Cl.: F16L 49/02, F16L 17/02, F16L 21/00

(54) **Pipe joints and couplings**
Rohrverbindungsstellen und Kupplungen
Joints de tuyaux et raccords

(30) Priority: 30.05.1990 GB 9012067
(43) Date of publication of application: 04.12.1991
(73) Proprietor: VICTAULIC PLC, Hitchin Hertfordshire SG4 0UD (GB)
(72) Inventor: Grant, Nicholas, Peterborough, Cambridgeshire, PE1 2QQ (GB)
(74) Representative: Heath, Peter William Murray

(56) References cited:
- DD-A- 44 773
- DE-A- 3 026 681
- GB-A- 1 472 693
- GB-A- 2 166 829

## Description

This invention relates to pipe joints and couplings, and more particularly to pipe joints and couplings of the spigot and socket kind where the socket is formed at both ends of a sleeved coupling within which spigots of two adjacent pipes are inserted.

Although the invention has application to joints and couplings for pipes formed of many materials such as metal or plastics, it has particular application in relation to clay pipes where manufacturing tolerances are greater than with pipes of plastics or metal and the couplings therefor must take into account considerable variation in diameter of the pipes to be coupled or joined.

It is to be understood that by the expression "pipe" as used herein is meant a pipe-like member such as pipes as such, and additionally pipe fittings such as "T" junctions, elbows, bends, reducers, and valve inlets, for example.

GB-A-1472693 in the name of Peter F.V. Lloyd describes a pipe coupling suitable for coupling inter alia clay pipes. The coupling includes an elastomeric sealing ring which is held within the mouth of the coupling by means of a locking ring.

The present invention is especially applicable to joints and couplings for jacking pipes, which are essentially used for underground installations in which, from a chamber constructed below ground level, a bore is driven generally parallel to the ground surface from within the chamber and pipes are driven into the bore from within the chamber one after the other usually closely following (and often attached to) the bore driving apparatus to provide a lining to the bore.

Again, however, the invention is applicable to joints and couplings for non-jacking pipes, and it is an object of the present invention to provide joints and couplings having advantageous features applicable both with respect to jacking pipes, and with respect to non-jacking pipes.

In accordance with the present invention, there is provided a coupling for forming a pipe joint of the spigot and socket kind, wherein the coupling defines a double socket, the coupling including a sleeve adapted to receive within it from each end the spigot of two pipes to be connected therewith, the sleeve having a reduced diameter portion both internally and externally at or adjacent its axial mid point; two resilient tubular clip members of an internal diameter no less than the external diameter of the main portion of the sleeve, the clip members having resilient radially inwardly turned shoulders at or towards one end and being adapted to be slid upon the sleeve one from each end such that the radially inwardly turned shoulders clip into the reduced diameter portion of the sleeve, the clip members each extending axially beyond the associated end of the sleeve and having at their axially outer ends a radially inwardly directed annular flange of greater radial width than the wall thickness of the sleeve, each of the flanges connecting at their radially inner ends to an inwardly axially directed annular wall portion whereby to define with the axially outer ends of the sleeve therewithin an annular necked recess; a sealing member located at each end of the coupling having a locating portion conforming to and disposed within the necked recess, and a sealing portion adapted in use on its radially outer side to sealingly engage with the inner surface of the sleeve and on its radially inner side to engage sealingly with the spigot of the pipe to be connected, characterised in that the reduced diameter portion both internally and externally of the sleeve is disposed midway along its length, in that the inner surface of the sleeve with which the radially outer side of the sealing member is engaged is not an inner surface of the reduced diameter portion of the sleeve,and in that said sealing member and said reduced diameter portion are axially spaced apart.

Particular embodiments of the invention are as defined in the dependent claims appended hereto.

A radially inwardly directed annular flange may be provided in association with the reduced diameter portion of the sleeve.

The radially inwardly directed flange may be attached or integral with the sleeve, and where it is integral with the sleeve it may have a reduced thickness portion therearound closely adjacent its junction with the sleeve for removal by breakage in situations where the flange is not required.

Alternatively the radially inwardly directed flange may be provided by a resilient removable flange member, the removable flange member being in the form of a split annular member, the ends at the split of the flange being separated from one another in its relaxed condition, and being of a configuration, in section around the annulus, of a generally "Y" shape, with arms of the Y embracing the radially internal reduced diameter portion of the sleeve and with a limb generally central thereof extending radially inwardly of the coupling, the flange being capable of resilient movement of its split ends towards each other whereby to reduce the diameter of the removable flange and enable it to be separated from the reduced diameter portion of the coupling, and to be removed axially therefrom.

Where a resilient removable flange member is used this may be provided around its inner periphery with cut away portions to decrease its stiffness, and also to provide openings by means of which the flange may be gripped for drawing together the ends of the split to reduce the diameter of the flange to enable its removal from the coupling.

The reduced diameter portion of the sleeve provided by the invention produces the advantage that in use even where the wall thickness of the components of the coupling is relatively low it surrounds the end of a pipe to be connected by the coupling and, because of its reduced internal diameter, prevents excessive angular deflection of the pipe within the coupling. This is of particular importance when the coupling is used with the jacking pipe where any such excessive angular deflection is to be discouraged.

Where used, the radially inwardly directed flange enables the coupling to have a number of advantageous features. Thus, where a pair of jacking pipes are to be connected by means of the coupling, the flange can be arranged to lie between respective reduced diameter spigots of the jacking pipes to be connected to provide for thrust transfer between the pipes during jacking without risk of damage to the spigot ends. At the same time, the outer diameter of the sleeve, and the superimposed clip members, may be such that the outside diameter of the clip members is at least approximately the same as the outside diameter of the jacking pipe so as to provide an overall smooth surface, during jacking, to the internal wall of the bore through which the pipes are being moved.

The component of the coupling may be formed of plastics material such as polypropylene, and the sealing member of rubber or synthetic rubber.

The invention includes within its scope a joint between two pipes incorporating a coupling as herein defined.

In order that the invention may be more readily understood, two embodiments thereof will now be described by way of example with reference to the accompanying drawings in which:-
Figure 1 is a sectional elevation of one side of a joint between two jacking pipes incorporating a first form of a coupling according to the invention;
Figure 2 is an end elevation of the removable flange of the joint of Figure 1;
Figure 3 is a side elevation, partly in section of the removable flange of Figure 2; and
Figure 4 is a sectional elevation of one side of a partial joint between two jacking pipes incorporating a second form of a coupling according to the invention.

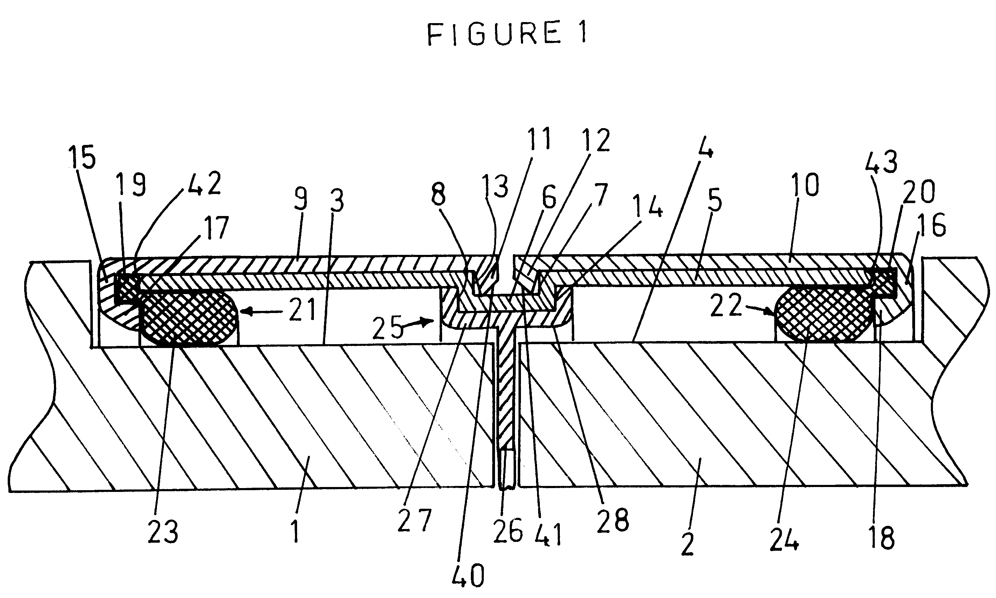

Referring now to the Figures 1,2 and 3 of drawings, particularly Figure 1,it will be seen that two clay jacking pipes 1,2 are disposed end-to-end, each having a reduced diameter spigot portion 3,4. Disposed at the spigot portions 3,4 is a coupling comprising a sleeve 5 extending around both of the portions 3,4. As can be seen the sleeve 5 has mid-way along its length a portion 6 of reduced internal and external diameter, provided with sharp internal 7,13 and external 8,14 shoulders.

Disposed about the sleeve 5 are two tubular clip members 9,10 having external diameters corresponding to the external diameter of the pipes 1,2. The clip members 9,10 are placed upon the sleeve 5 by sliding over the outer surface thereof from each end until radially inwardly angled shoulders 11, 12 snap down behind corresponding shoulders 7,13 at the edges of the reduced diameter portion of the sleeve. The clip members are formed of an appropriate resilient material to enable this to occur.

At their axially outer end the clip members 9,10 are provided with radially inwardly extending annular flanges 15,16, together with axial return portions 17,18 which, with the outer ends of the sleeve 5, form necked annular recesses at each end of the coupling within which are held correspondingly shaped portions 19,20 of annular sealing gaskets (of synthetic rubber or plastic for example) 21,22, each of which additionally has a bulbous sealing portion 23,24 arranged, in use, to be compressed between the inner surface of the sleeve 5 and the outer surface of the spigot portion 3,4 of each pipe 1,2 to provide adequate sealing at the coupling for the two pipes being joined.

The shoulders 11,12 of the clip members 9,10 are provided with outer chamfers 40,41 to aid movement thereof onto the outer sleeve ends during assembly, and likewise the radially outer edges of the sleeve 5 have similar chamfers 42,43 for the same purpose. In addition, the chamfers 42,43 provide a space in the necked annular recesses into which material from the portions 19,20 of the gaskets 21,22 may flow when compressed.

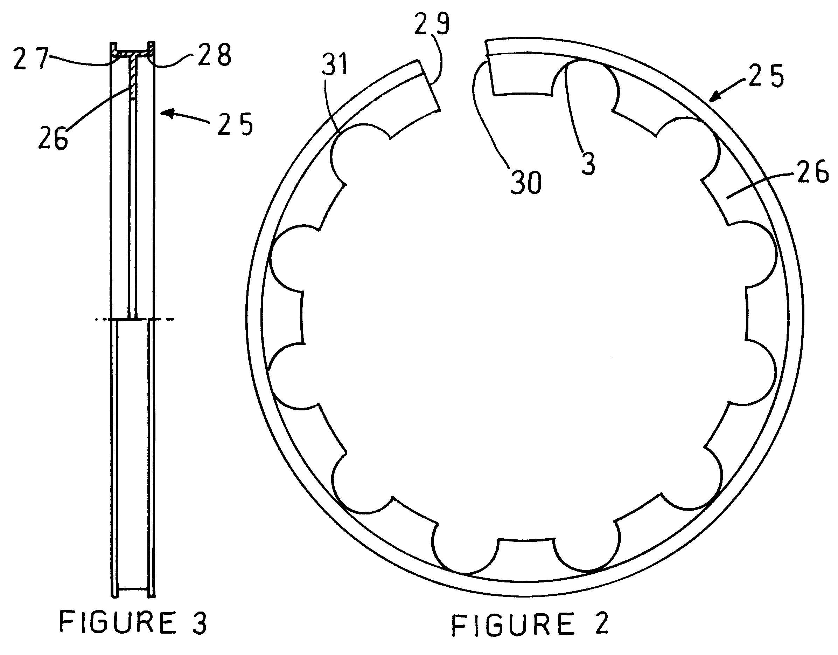

Located within the sleeve centrally thereof is a removable flange 25 the configuration of which is shown most clearly in Figures 2 and 3. The section around the periphery of the removable flange 25 is somewhat "Y" shaped having an inwardly radially extending limb 26 and two arms 27,28 extending axially from the radially outer end of that limb axially of the sleeve before turning radially outwardly so as to engage upon the internal wall of the reduced diameter portion of the sleeve together and the sharply angled internal shoulders 8,14 thereof.

As can be seen from Figure 2, the removable flange is split, the ends 29,30 of the split being separated from one another by a significant gap, and is also provided with partially circular rebates 31 into the radially inwardly extending limb 26 from the radially inner side thereof at a plurality of points around its inner periphery so as to increase the resilience and reduce the stiffness of the removable flange, and also so as to provide, at the two recesses adjacent the split ends, with surfaces capable of being gripped by an appropriate tool to draw together the split ends so as to reduce the diameter of the flange to enable it initially to be inserted into the coupling and correctly fitted in position, and also to enable it, when required, to be removed therefrom.

As can be seen, the coupling when used with a pair of reduced diameter spigot end jacking pipes, provides a coupling having a diameter corresponding with that of the outside diameter of the jacking pipe therefore providing a general smooth outer surface to the pipe during jacking to ease its movement through the pre-formed bore, and which also, by means of its removable flange, provides with its inwardly radially extending limb appropriate means for tansferring thrust during jacking between the two pipes without damage to their spigot ends.

It is to be appreciated that if disposed as a coupling about non-jacking pipes having a diameter equivalent to the outer diameter of the reduced diameter spigot ends 3,4 of the pipes shown in Figure 1, then a radially proud coupling is provided in which the radially inwardly extending central limb 26 of the removable flange constitutes a centre stop which can be removed to enable the coupling to move along one or more pipes so that, with judicious removal of the removable flange of a number of couplings and consequent axial movement of the couplings upon pipes, enables transverse removal of one or more pipes should such be damaged or require attention in any other way.

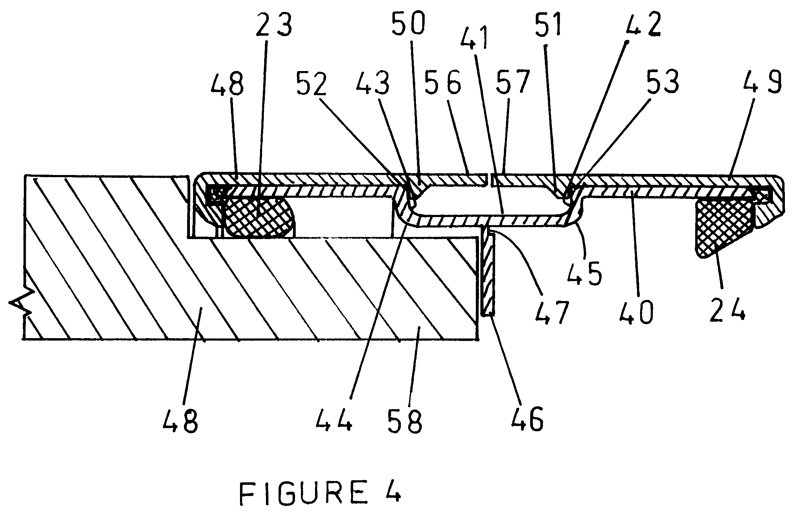

The arrangement showm in Figure 4 has many characteristics common with that of Figure 1. However, in this case the coupling is not provided with a removable flange. Thus as can be seen sleeve 40 has with, Figure 1 a portion 41 midway along its length of reduced external and internal diameter. In this instance the radially inner shoulders 42,43 and 44,45 of the reduced diameter portion 41 are not sharply angled, but are curved.

Located centrally of the reduced diameter portion 41 of the sleeve 40 is an annular integral flange 46 extending radially inwardly. This has a reduced thickness portion 47 at its outer extremity to allow removal by breakage of the flange 46 if required. The integral flange acts, when used with jacking pipes 48 (one only shown), for transferring thrust during jacking between the two pipes without damage to their spigot ends. The reduced diameter portion 41 of the sleeve 40 is, compared with the corresponding portion 6 of the arrangement of Figure 1 of greater axial length, and clip members (corresponding to clip members 9 and 10 of Figure 1) are not only provided with radially inwardly angled shoulders 50,51 adapted to snap behind corresponding shoulders 52,53 at sharp radially outer edges of the reduced diameter portion of the sleeve, but also continue beyond these snap shoulders 50,51 with extension portions 56,57 of parallel walls closely approaching each other at their ends. In practice, the ends of the extensions are as close to each other as possible to prevent the ingress of detritus. The purpose of such parellel extensions 56,57 is to assist the assembly of the clip members upon the sleeve by providing initial location on the outside diameter of the sleeve.

Again the curved radially inward shoulders 44,45 of the reduced diameter portion 40 provide a guide or "lead-in" for pipes being inserted into the coupling which might be misaligned, thereby preventing damage to the outer edge of the end of the spigot of the jacking pipe.

The reduced diameter portion of the sleeve overall has the beneficial advantage, with a coupling member having a relatively small overall thickness of wall of its components, of surrounding relatively closely the spigot 58 of the jacking pipes and therefore preventing excessive annular deflection of the pipes within the coupling which could otherwise lead to damage of these spigot ends during jacking and reduce the certainty of the seal of the coupling about the pipes.

It is to be understood that the foregoing is merely exemplary of pipe couplings and pipe joints in accordance with the invention.

## Claims

1. A coupling for forming a pipe joint of the spigot and socket kind, wherein the coupling defines a double socket, the coupling including a sleeve (5) arranged to receive within it from each end the spigots (3, 4) of two pipes (1, 2) to be connected therewith, the sleeve (5) having a reduced diameter portion (6) both internally and externally; two resilient tubular clip members (9, 10) of an internal diameter no less than the external diameter of the main portion of the sleeve, the clip members (9, 10) having resilient radially inwardly turned shoulders (11, 12) at or towards one end and being adapted to be slid upon the sleeve (5) one from each end such that the radially inwardly turned shoulders (11, 12) clip into the reduced diameter portion (6) of the sleeve (5), the clip members (9, 10) each extending axially beyond the associated end of the sleeve and having at their axially outer ends a radially inwardly directed annular flange (15, 16) of greater radial width than the wall thickness of the sleeve (5), each of the flanges (15, 16) connecting at their radially inner ends to an inwardly axially directed annular wall portion (17, 18) whereby to define with the axially outer ends of the sleeve therewithin an annular necked recess; a sealing member (21, 22) located at each end of the coupling having a locating portion (19, 20) conforming to and disposed within the necked recess, and a sealing portion (23, 24) adapted in use on its radially outer side to sealingly engage with the inner surface of the sleeve (5) and on its radially inner side to engage sealingly with the spigot (3, 4) of the pipe (1, 2) to be connected; characterised in that the reduced diameter portion both internally and externally of the sleeve is disposed midway along its length, in that the inner surface of the sleeve (5) with which the radially outer side of the sealing member (21, 22) is engaged is not an inner surface of the reduced diameter portion (6) of the sleeve, and in that said sealing member (21, 22) and said reduced diameter portion (6) are axially spaced apart.

2. A coupling according to claim 1 further characterised in that the reduced diameter portion (6) is provided with curved radially inward shoulders (44, 45) to provide a guide or lead in for pipes being inserted into the coupling which are misaligned.

3. A coupling as claimed in claim 1 wherein a radially inwardly directed annular flange (26, 46) is provided in association with the reduced diameter portion (6) of the sleeve.

4. A coupling as claimed in claim 3 wherein the radially inwardly directed flange (26, 46) is attached to or integral with the sleeve.

5. A coupling as claimed in claim 4 in which the radially inwardly directed flange (46) is integral with the sleeve (5), and wherein the flange (46) has a reduced thickness portion (47) therearound closely adjacent its junction with the sleeve (5) for removal by breakage.

6. A coupling as claimed in any one of the preceding claims wherein the tubular clip members (9, 10) have extension portions (56, 57) beyond the resilient radially inwardly turned shoulders (11, 12) acting as guides during assembly of the clip members (9, 10) on the sleeve (5).

7. A pipe joint between two pipes incorporating a coupling as claimed in any one of the preceding claims.

## Patentansprüche

1. Kupplung zum Formen einer Rohrverbindung des Stemm-Muffentyps, die Kupplung eine zur Aufnahme der Schäfte (3, 4) von zwei damit zu verbindenden Rohren (1, 2) in ihr von jedem Ende angeordnete Hülse (5) einschließend, die Hülse (5) einen Abschnitt von sowohl innerlich als auch äußerlich kleinerem Durchmesser (6) aufweisend, wobei die Kupplung eine Doppelmuffe, zwei elastische röhrenförmige Klemmenelemente (9, 10) mit einem Innendurchmesser, der dem Außendurchmesser des Hauptabschnitts der Hülse mindestens gleicht, wobei die Klemmenelemente (9, 10) an oder hin zu einem Ende elastische, radial nach innen gekehrte Schultern (11, 12) haben und so angepaßt sind, daß je eines von jedem Ende so auf die Hülse (5) aufgeschoben werden kann, daß die radial nach innen gekehrten Schultern (11, 12) in den Abschnitt von kleinerem Durchmesser (6) der Hülse (5) einrasten, wobei sich die Klemmenelemente (9, 10) jeweils axial über das zugehörige Ende der Hülse hinaus erstrecken und an ihren axial äußeren Enden einen radial nach innen gerichteten ringförmigen Flansch (15, 16) mit größerer radialer Breite als die Wanddicke der Hülse (5) haben, wobei die Flansche (15, 16) jeweils an ihren radial inneren Enden mit einem nach innen axial gerichteten, ringförmigen Wandabschnitt (17, 18) verbunden sind, um dadurch mit den axial äußeren Enden der Hülse darin eine ringförmige eingeschnürte Vertiefung zu definieren, ein an jedem Ende der Kupplung befindliches Dichtungselement (21, 22) mit einem der eingeschnürten Vertiefung entsprechenden und in ihr angeordneten Paßabschnitt (19, 20) und einen im Einsatz auf seiner radial äußeren Seite zum abdichtenden Anliegen an der inneren Oberfläche der Hülse (5) und auf seiner radial inneren Seite zum abdichtenden Anliegen an dem Schaft (3, 4) des anzuschließenden Rohres (1, 2) angepaßten Dichtungsabschnitt (23, 24) definiert, dadurch gekennzeichnet, daß der Abschnitt der Hülse von sowohl innerlich als auch äußerlich kleinerem Durchmesser auf halbem Weg entlang ihrer Länge angeordnet ist, daß die innere Oberfläche der Hülse (5), an der die radial äußere Seite des Dichtungselements (21, 22) anliegt, keine innere Oberfläche des Abschnitts von kleinerem Durchmesser (6) der Hülse ist, und daß genanntes Dichtungselement (21, 22) und genannter Abschnitt von kleinerem Durchmesser (6) axial mit Zwischenraum zueinander angeordnet sind.

2. Kupplung nach Anspruch 1, weiter dadurch gekennzeichnet, daß der Abschnitt von kleinerem Durchmesser (6) mit radial nach innen gebogenen Schultern (44, 45) versehen ist, um eine Führung oder Einführung für falsch ausgerichtete Rohre vorzusehen, die in die Kupplung eingefügt werden.

3. Kupplung nach Anspruch 1, wobei ein radial nach innen gerichteter ringförmiger Flansch (26, 46) in Verbindung mit dem Abschnitt von kleinerem Durchmesser (6) der Hülse vorgesehen ist.

4. Kupplung nach Anspruch 3, wobei der radial nach innen gerichtete Flansch (26, 46) an der Hülse angebracht oder in sie integriert ist.

5. Kupplung nach Anspruch 4, wobei der radial nach innen gerichtete Flansch (46) in die Hülse (5) integriert ist, und wobei der Flansch (46) darum herum einen eng an seine Zusammenfügung mit der Hülse (5) anschließenden Abschnitt geringerer Dicke (47) zum Entfernen durch Abbrechen hat.

6. Kupplung nach einem der vorangehenden Ansprüche, wobei die röhrenförmigen Klemmenelemente (9, 10) Verlängerungsabschnitte (56, 57) über die elastischen, radial nach innen gekehrten Schultern (11, 12) hinaus haben, die während des Anbringens der Klemmenelemente (9, 10) an der Hülse (5) als Führungen dienen.

7. Rohrverbindung zwischen zwei Rohren, die eine Kupplung nach einem der vorangehenden Ansprüche einschließt.

## Revendications

1. Un couplage destiné à constituer un raccord de tuyau du type à emboîtement, dans lequel le couplage définit un bout femelle double, le couplage comportant un manchon (5) agencé de façon à recevoir dans chacune de ses extrémités les bouts mâles (3, 4) des deux tuyaux (1, 2) destinés à être raccordés, le manchon (5) ayant une portion à diamètre réduit (6) à la fois à l'intérieur et à l'extérieur ; deux éléments à clip tubulaires élastiques (9, 10) dont le diamètre interne n'est pas inférieur au diamètre extérieur de la portion principale du manchon, les éléments à clip (9, 10) possédant des épaulements élastiques tournés vers l'intérieur dans le sens radial (11, 12), au niveau de l'une des extrémités, ou vers l'une des extrémités, et étant adaptés de façon à pouvoir être glissés sur le manchon (5), un à partir de chaque extrémité, de telle sorte que les épaulements tournés vers l'intérieur dans le sens radial (11, 12) s'enclipsent dans la portion à diamètre réduit (6) du manchon (5), les éléments à clip (9, 10) se prolongeant dans le sens axial au-delà de l'extrémité associée du manchon et ayant à leurs extrémités externes dans le sens axial une bride annulaire dirigée vers l'intérieur dans le sens radial (15, 16) d'une largeur radiale plus grande que l'épaisseur de paroi du manchon (5), chacune des brides (15, 16) étant branchée, au niveau de ses extrémités internes dans le sens radial, sur une portion de paroi annulaire dirigée dans le sens axial vers l'intérieur (17, 18), afin de définir avec les extrémités externes dans le sens axial du manchon un évidement annulaire à col ; un élément d'étanchéité (21, 22) positionné à chaque extrémité du couplage ayant une portion de repérage (19, 20) se conformant à l'évidement à col et disposé à l'intérieur de ce dernier, ainsi qu'une portion d'étancheité (23, 24) adaptée, en service, sur le côté externe dans le sens radial, de façon à s'engager de façon étanche avec la surface interne du manchon (5), et sur son côté interne dans le sens radial à s'engager de façon étanche avec le bout mâle (3, 4) du tuyau (1, 2) à raccorder ; caracterisé en ce que la portion à diamètre réduit à la fois à l'intérieur et à l'extérieur du manchon est disposée à mi-chemin sur sa longueur, en ce que la surface interne du manchon (5) avec laquelle le côté externe dans le sens radial de l'élément d'étanchéité (21, 22) est engagé n'est pas une surface interne de la portion à diamètre réduit (6) du manchon, et en ce que ledit élément d'étanchéité (21, 22) et ladite portion à diamètre réduit (6) sont distants l'un de l'autre dans le sens axial.

2. Un couplage, selon les stipulations de la revendication 1, caractérisé, en outre, en ce que la portion à diamètre réduit (6) est munie d'épaulements courbés vers l'intérieur dans le sens radial (44, 45) afin de servir de guide, ou d'amorce pour les tuyaux qui sont introduits dans le couplage et qui sont mal alignés.

3. Un couplage, selon les stipulations de la revendication 1, dans lequel une bride annulaire dirigée vers l'intérieur dans le sens radial (26, 46) a été prévue en conjonction avec la portion à diamètre réduit (6) du manchon.

4. Un couplage, selon les stipulations de la revendication 3, dans lequel la bride dirigée vers l'intérieur dans le sens radial (26, 46) est fixée au manchon, ou fait partie intégrante de ce dernier.

5. Un couplage, selon les stipulations de la revendication 4, dans lequel la bride dirigée vers l'intérieur dans le sens radial (46) fait partie intégrante du manchon (5), et dans lequel la bride (46) possède sur sa périphérie une portion à épaisseur réduite (47) étroitement adjacente a sa jonction avec le manchon (5) en vue d'une dépose en cas de cassure.

6. Un couplage, selon les stipulations de l'une quelconque des revendications précédentes, dans lequel les éléments à clip tubulaires (9, 10) possèdent des portions de prolongement (56, 57) au-delà des épaulements élastiques tournés vers l'intérieur dans le sens radial (11, 12) agissant en tant que guides lors du montage des éléments à clip (9, 10) sur le manchon (5).

7. Un raccord de tuyau entre deux tuyaux, comportant un couplage selon les stipulations de l'une quelconque des revendications précédentes.
